# EUROPÄISCHE PATENTSCHRIFT

(11) **EP 2 912 324 B1**
(45) Veröffentlichungstag und Bekanntmachung des Hinweises auf die Patenterteilung: **28.06.2017**
(21) Anmeldenummer: 13783567.4
(22) Anmeldetag: 28.10.2013
(51) Int. Cl.: F16B 3/06, F16B 5/06, F16B 13/06

(54) **SCHRAUBVERBINDUNGSANORDNUNG**
SCREW CONNECTION ARRANGEMENT
ENSEMBLE RACCORD VISSÉ

(30) Priorität: 29.10.2012 DE 102012110338
(43) Veröffentlichungstag der Anmeldung: 02.09.2015
(73) Patentinhaber: ThyssenKrupp Industrial Solutions AG, 45143 Essen (DE)
(72) Erfinder: SZCZELINA, Piotr, 59269 Beckum (DE); PAPAJEWSKI, Detlef, 44879 Bochum (DE); SCHATZ, Peter, 59320 Ennigerloh (DE); MERGNER, Michael, 59269 Beckum (DE)
(74) Vertreter: thyssenkrupp Intellectual Property GmbH
(86) Internationale Anmeldenummer: PCT/EP2013/072514
(87) Internationale Veröffentlichungsnummer: WO 2014/067900

(56) Entgegenhaltungen:
- FR-A1- 2 486 174
- US-A- 1 823 428
- US-A- 5 675 619

## Beschreibung

Die Erfindung betrifft eine Schraubverbindungsanordnung, mit der zwei Teile miteinander verbunden werden können. Die Schraubverbindungsanordnung soll insbesondere für Schraubverbindungen geeignet sein, die herkömmlicherweise mit Schrauben und Muttern gebildet werden.

Eine Schraubverbindungsanordnung, die aus einer Schraube und einer Mutter gebildet wird, ist beispielsweise aus der Offenlegungsschrift US 5 675 619 A bekannt. Eine solche Schraubverbindungsanordnung weist einen Bolzen und eine Bolzenmutter auf, wobei die Bolzenmutter auf einem Bolzenlängsabschnitt mit einem Gewinde aufgeschraubt ist. Wird die Bolzenmutter festgezogen, so wird der Bolzen in einen Hülsenlängsabschnitt einer Hülse eingezogen. Allerdings ist dieser Offenlegungsschrift nicht zu entnehmen, wie die Hülse kontrolliert an zu fügenden Bauteilen festziehbar ist.

Allgemein handelt es sich bei einer Schraubverbindung mit Schraube und Mutter um eine übliche, sehr weit verbreitete Verbindungsform. Die miteinander zu verbindenden Teile weisen Befestigungsöffnungen auf, die übereinander gelegt werden, wobei dann die Teile durch Einstecken der Schraube in die Befestigungsöffnungen und durch Anziehen der Mutter miteinander verbunden werden. Insbesondere können die beiden Teile mit einem Flansch versehen sein, in dem die Befestigungsöffnungen eingebracht sind.

Bei herkömmlichen Schrauben mit Muttern wird in Längsrichtung eine formschlüssige Verbindung dadurch erzeugt, dass einerseits der Schraubenkopf und andererseits die Mutter an Außenflächen der Teile anliegen. Dort wo die beiden Teile direkt aufeinander aufliegen, wird durch das Anziehen von Schraube und Mutter in Querrichtung ein Reibschluss erreicht. Ein spielfreier Formschluss in Querrichtung ist nicht möglich, weil die Befestigungsöffnungen gegenüber der Schraube ein Übermaß aufweisen müssen, damit die Schraube leicht eingeführt werden kann.

Gerade bei Maschinen unter rauen Einsatzbedingungen, beispielsweise bei Maschinen der Fördertechnik, ist zu berücksichtigen, dass der Innendurchmesser der Befestigungsöffnungen auch durch Verschmutzungen reduziert sein kann, wobei gerade schwere miteinander zu verbindenden Teile nur aufwendig passgenau positioniert werden können.
Vor diesem Hintergrund liegt der vorliegenden Erfindung die Aufgabe zugrunde, eine Schraubverbindungsanordnung anzugeben, welche einfach zu handhaben ist und eine verbesserte Festigkeit und Genauigkeit einer Schraubverbindung ermöglicht.

Zur Lösung dieser Aufgabe lehrt die vorliegende Erfindung eine Schraubverbindungsanordnung gemäß Patentanspruch 1, welche eine Hülse und einen Bolzen aufweist.

Die Hülse weist an einem ersten Hülsenende einen radial vorstehenden Bund und ausgehend von dem ersten Hülsenende einen ersten Hülsenlängsabschnitt auf, wobei der erste Hülsenlängsabschnitt durch Längsschlitze aufspreizbar ist und einen sich ausgehend von dem ersten Hülsenende konisch verjüngenden Innendurchmesser aufweist.

Der Bolzen als weiterer Bestandteil der erfindungsgemäßen Schraubverbindungsanordnung ist mit einem ersten Bolzenlängsabschnitt in den ersten Hülsenlängsabschnitt eingesetzt und weist an einem zweiten Ende des Bolzens einen sich zumindest teilweise aus der Hülse hinauserstreckenden zweiten Bolzenlängsabschnitt mit einem Gewinde auf, wobei sich der erste Bolzenlängsabschnitt in Richtung des zweiten Endes des Bolzens konisch verjüngt.

Zunächst erlaubt der radial vorstehende Bund der Hülse, dass in einer Längsrichtung ein Verspannen der Schraubverbindungsanordnung zum Verbinden zweier Teile möglich ist.

Erfindungsgemäß wird aber auch der erste Hülsenlängsabschnitt radial aufgeweitet, wenn der erste Bolzenlängsabschnitt mit seiner konischen Form durch ein Anziehen einer auf das Gewinde des zweiten Bolzenlängsabschnittes aufgesetzten Bolzenmutter tiefer in den sich ebenfalls konisch verjüngenden ersten Hülsenlängsabschnitt hineingezogen wird. Durch die erst nach dem Einsetzen erfolgende radiale Aufweitung des ersten Hülsenlängsabschnittes kann erreicht werden, dass die Hülse bei der Montage zunächst ohne ein Klemmen in die einander zugeordneten Befestigungsöffnungen zweier Teile eingeschoben werden kann, auch wenn diese nicht präzise zueinander ausgerichtet sind. Bei einem Aufspreizen des ersten Hülsenlängsabschnittes durch den ersten Bolzenlängsabschnitt kann dann eine durch die Längsschlitze unterbrochene Mantelfläche des ersten Hülsenlängsabschnittes so weit aufgeweitet werden, dass diese zumindest abschnittsweise an einem Innenumfang der Befestigungsöffnungen des ersten Teils sowie des zweiten Teils anliegt. Der für das Einschieben der Hülse zunächst notwendige radiale Spalt zwischen der Hülse und dem Innenumfang der Befestigungsöffnungen wird dadurch geschlossen, so dass auch in Querrichtung eine spielfreie formschlüssige Verbindung erreicht wird.

Durch das Aufspreizen des ersten Hülsenlängsabschnittes kann bei einer leichten Fehlausrichtung der beiden Teile auch eine Zentrierung der einander zugeordneten Befestigungsöffnungen und damit auch eine präzise Ausrichtung der miteinander zu verbindenden Teile erreicht werden. Erfindungsgemäß kann somit bei einer besonders leichten Handhabung eine genauere Schraubverbindung erreicht werden.

Wenn die Mantelfläche des ersten Hülsenlängsabschnittes in radialer Richtung spielfrei an dem Innenumfang der Befestigungsöffnungen anliegt, wird in einer Querrichtung gesehen zusätzlich zu dem Reibschluss zwischen den zwei Teilen ein spielfreier Formschluss erreicht. In Längsrichtung der Schraubverbindungsanordnung gesehen wird dagegen der auch bei einer Schraube übliche Formschluss durch einen Reibschluss unterstützt, so dass im Vergleich zu einer herkömmlichen Schraubverbindung sowohl in axialer Richtung als auch in Querrichtung eine erhöhte Festigkeit der Schraubverbindung erreicht werden kann.

Erfindungsgemäß ist vorgesehen, dass ausgehend von einem zweiten Hülsenende an einem zweiten Hülsenlängsabschnitt ein Außengewinde für die Aufnahme einer Hülsenmutter vorgesehen ist, wobei eine Stirnfläche an dem zweiten Hülsenende eine Anlagefläche für die Bolzenmutter bildet. Gemäß dieser erfindungsgemäßen Ausgestaltung der Erfindung erfolgt das Verspannen der Schraubverbindungsanordnung mit zwei unterschiedlichen Elementen, nämlich der Bolzenmutter und der Hülsenmutter.

Die Funktionsweise der Hülse mit der Hülsenmutter entspricht dabei im Wesentlichen einer herkömmlichen Schraube und einer herkömmlichen Mutter. Die Bolzenmutter dient dagegen dazu, den Bolzen tiefer in die Hülse, das heißt in Richtung des zweiten Hülsenendes zu ziehen, um eine radiale Aufspreizung des ersten Hülsenlängsabschnittes zu bewirken und so eine radiale Verspannung zu ermöglichen.

Das Anziehen von Hülsenmutter und Bolzenmutter kann auf unterschiedliche Weise erfolgen. Je nach Anwendungsfall kann es jedoch nachteilig sein, wenn zunächst die Hülsenmutter sehr stark angezogen wird, weil dann die miteinander zu verbindenden Teile auch in Querrichtung so stark durch einen Reibschluss miteinander verbunden sind, dass durch ein Anziehen der Bolzenmutter keine Zentrierung der einander zugeordneten Befestigungsöffnungen durch das Aufspreizen des ersten Hülsenlängsabschnittes erfolgen kann.

Ein ähnliches Problem kann auftreten, wenn bei einer Ausgestaltung mit Bolzenmutter und Hülsenmutter zunächst die Bolzenmutter sehr stark angezogen wird. In einem solchen Fall wird zwar eine optimale Zentrierung der beiden Befestigungsöffnungen erreicht, jedoch klemmt dann die Mantelfläche des ersten Hülsenlängsabschnittes fest an dem Innenumfang der Befestigungsöffnungen. Diese an sich erwünschte, in Längsrichtung wirkende reibschlüssige Verbindung kann aber dazu führen, dass die Hülse mit der Hülsenmutter nicht oder nur mit einem sehr großen Kraftaufwand in Längsrichtung verspannt werden kann.

Um die beschriebenen Probleme zu vermeiden, kann es zweckmäßig sein, die Hülsenmutter und die Bolzenmutter in mehreren Schritten abwechselnd anzuziehen. Alternativ besteht auch die Möglichkeit, zunächst die Bolzenmutter fest anzuziehen, um eine genaue Zentrierung der Befestigungsöffnungen zu erreichen, wobei dann vor einem Anziehen der Hülsenmutter die Bolzenmutter zumindest leicht gelöst und erst abschließend wieder fest angezogen wird.

Um bei einem Anziehen der Hülsenmutter sowie der Bolzenmutter ein Mitdrehen der Hülse bzw. des Bolzens zu vermeiden, ist eine entsprechende Fixierung vorzusehen.

Bezüglich der Hülse kann der Bund an seinem Außenumfang Werkzeugaufnahmeflächen, beispielsweise einen Sechskant, aufweisen, so dass dann die Hülse bei der Montage mit einem entsprechenden Werkzeug gehalten werden kann. Entsprechend kann auch der Bolzen an seinem ersten und/oder zweiten Ende eine Werkzeugaufnahme aufweisen, um ein Gegenhalten zu ermöglichen. Sowohl an dem ersten Ende als auch an dem zweiten Ende ist es möglich, einen Schlitz oder einen Innensechskant vorzusehen, um dort mit einem geeigneten Werkzeug eingreifen zu können. An dem ersten Ende des Bolzens kann auch vorgesehen sein, dass sich der erste Bolzenlängsabschnitt aus der Hülse hinauserstreckt, wobei dann dort auch ein Außensechskant oder dergleichen vorgesehen sein kann. An dem zweiten Ende des Bolzens ist zu berücksichtigen, dass die Werkzeugaufnahme sich nicht über das dort vorgesehene Gewinde hinauserstrecken darf, welches zweckmäßiger als Außengewinde ausgestaltet ist.

Neben entsprechenden Werkzeugaufnahmen kann auch eine Verdrehsicherung durch einen Formschluss erreicht werden. So ist es beispielsweise möglich, dass die Hülse an ihrer Außenseite nicht um ihren gesamten Umfang und ihre gesamte Länge genau kreiszylinderförmig ist, wobei dann zumindest eines der beiden miteinander zu verbindenden Teile eine komplementäre, von einer Kreisform abweichende Kontur aufweist. Darüber hinaus besteht auch die Möglichkeit, zwischen dem sich konisch verjüngenden ersten Bolzenlängsabschnitt und dem zugeordneten ersten Hülsenlängsabschnitt eine formschlüssige Verdrehsicherung zu bilden. Eine solche Verdrehsicherung kann beispielsweise dadurch bereitgestellt werden, dass eines der Elemente mit einem Vorsprung oder mit einem in Längsrichtung verlaufenden Steg versehen ist, der in eine Nut oder einen Schlitz des anderen Elementes eingreift. Insbesondere kann auch zumindest einer der ohnehin für das Aufspreizen notwendigen Schlitze an dem ersten Hülsenlängsabschnitt für eine Verdrehsicherung genutzt werden, wenn der erste Bolzenlängsabschnitt einen zugeordneten Vorsprung oder Steg aufweist.

Gegenstand der Erfindung ist auch eine Schraubverbindung gemäß der Ansprüche 6 bis 9.

Wie bereits zuvor erläutert, weist die Hülse gemäß einer bevorzugten Ausgestaltung der Erfindung einen ersten Hülsenlängsabschnitt und einen zweiten Hülsenlängsabschnitt auf, wobei der erste Hülsenlängsabschnitt in Zusammenwirkung mit dem Bolzen für eine radiale Verspannung vorgesehen ist, und wobei der zweite Hülsenlängsabschnitt mit einem Außengewinde versehen ist, so dass die Hülse mit einer Hülsenmutter in Längsrichtung verspannt werden kann. Aus praktischer Sicht kann es zweckmäßig sein, wenn zwischen dem ersten Hülsenlängsabschnitt und dem zweiten Hülsenlängsabschnitt ein stufenförmiger Übergang vorgesehen ist. Während der erste Hülsenlängsabschnitt, zumindest nach seinem Aufspreizen, üblicherweise die entsprechenden Befestigungsöffnungen vollständig ausfüllen soll, weist der zweite Hülsenlängsabschnitt einen geringeren Außendurchmesser auf. Dieser stufenförmige Übergang ist bei der erfindungsgemäßen Schraubverbindung vorzugsweise außerhalb der Befestigungsöffnung des zweiten Teils angeordnet, wobei der stufenförmige Übergang von einer zwischen der Außenfläche des zweiten Teils und der Hülsenmutter angeordneten Unterlegscheibe verdeckt ist. Insbesondere besteht die Möglichkeit, eine speziell angepasste Unterlegscheibe vorzusehen, welche auch eine Stufenform aufweist.

Bei der beschriebenen Ausgestaltung mit einem stufenförmigen Übergang erstrecken sich die Längsschlitze vorzugsweise über die gesamte Länge des ersten Hülsenlängsabschnittes bis in den Bereich des stufenförmigen Überganges hinein, um eine gute Aufspreizbarkeit des ersten Hülsenlängsabschnittes zu ermöglichen.

Die Befestigungsöffnung des erstens Teils sowie des zweiten Teils können als übliche Bohrungen kreiszylindrisch ausgestaltet sein. Darüber hinaus besteht aber auch die Möglichkeit, dass die Befestigungsöffnungen des ersten Teils sowie des zweiten Teils sich jeweils in Richtung der zweiten Seite konisch verjüngen, wobei dann die mit ihrem Bund an einer Außenfläche des ersten Teils anliegende Hülse mit ihrem ersten Hülsenlängsabschnitt soweit aufgespreizt wird, dass diese sich an die konische Form der Befestigungsöffnungen anpasst.

Selbstverständlich können mit der erfindungsgemäßen Schraubverbindungsanordnung auch mehr als zwei Teile, die übereinander liegen, verbunden werden. Beispielsweise kann zwischen dem ersten Teil und dem zweiten Teil auch ein drittes Teil angeordnet sein, welches dann auch mit verbunden wird.

Die Erfindung wird im Folgenden anhand einer lediglich ein Ausführungsbeispiel darstellenden Zeichnung erläutert.

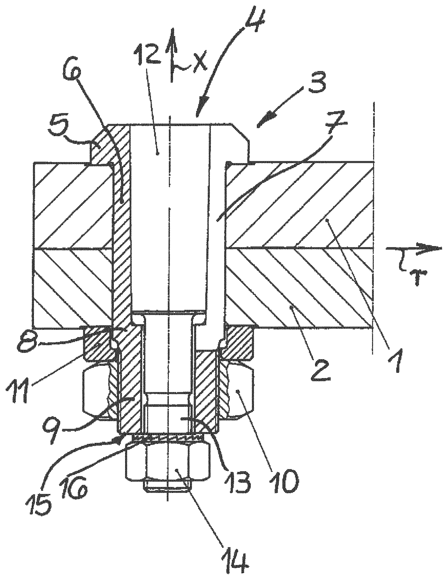

Die einzige Figur zeigt eine Schraubverbindung, bei der ein erstes Teil 1 an einer ersten Seite und ein zweites Teil 2 an einer zweiten Seite angeordnet sind, wobei das erste Teil 1 und das zweite Teil 2 an kreiszylinderförmigen Befestigungsöffnungen mit einer Schraubverbindungsanordnung verbunden sind.

Die Schraubverbindungsanordnung umfasst eine Hülse 3 und einen Bolzen 4.

Die Hülse 3 weist an einem ersten Hülsenende einen radial vorstehenden Bund 5 und ausgehend von dem ersten Hülsenende einen ersten Hülsenlängsabschnitt 6 auf. Der Hülsenlängsabschnitt 6 ist mit Längsschlitzen 7 versehen, so dass der erste Hülsenlängsabschnitt 6 in radialer Richtung aufspreizbar ist. Um den Umfang sind vorzugsweise zwischen drei und acht Längsschlitze 7 vorgesehen. Ausgehend von dem ersten Hülsenende verjüngt sich entlang des ersten Hülsenlängsabschnittes 6 der Innendurchmesser konisch.

Der erste Hülsenlängsabschnitt 6 erstreckt sich durch die Befestigungsöffnung des ersten Teils 1 und die Befestigungsöffnung des zweiten Teils 2 hindurch. Außerhalb der Befestigungsöffnung des zweiten Teils 2 ist ein stufenförmiger Übergang 8 vorgesehen, an dem ein zweiter, außerhalb der Befestigungsöffnungen angeordneter Hülsenlängsabschnitt 9 mit einem Außengewinde anschließt. Auf dem Außengewinde des zweiten Hülsenlängsabschnittes 9 ist eine Hülsenmutter 10 aufgeschraubt, mit der die Hülse 3 über eine Unterlegscheibe 11 gegen eine Außenfläche des zweiten Teils 2 verspannt ist. In axialer Richtung x wird damit eine formschlüssige Verbindung des ersten Teils 1 und des zweiten Teils 2 erreicht.

Der Bolzen 4 weist einen ersten Bolzenlängsabschnitt 12 sowie einen zweiten Bolzenlängsabschnitt 13 auf. Der erste Bolzenlängsabschnitt 13 ist in den ersten Hülsenlängsabschnitt 6 eingesetzt und weist eine in Richtung eines zweiten Endes des Bolzens 4, das heißt in Richtung des zweiten Bolzenlängsabschnittes 13 eine konisch verjüngte Außenfläche auf. Die konische Form des ersten Bolzenlängsabschnittes 12 ist an den konisch verlaufenden Innendurchmesser des ersten Hülsenlängsabschnittes 6 angepasst. Wenn der erste Bolzenlängsabschnitt 12 in Richtung der Verjüngung weiter in den ersten Hülsenlängsabschnitt 6 eingeschoben wird, wird der erste Hülsenlängsabschnitt 6 aufgrund der Längsschlitze 7 in radialer Richtung r aufgespreizt. Zu diesem Zweck ist an dem zweiten Bolzenlängsabschnitt 13 ein Außengewinde ausgebildet, auf welches eine Bolzenmutter 14 aufgeschraubt ist, die sich an einer Stirnfläche 15 des zweiten Hülsenlängsabschnittes 9 abstützt. Zwischen der Stirnfläche 15 und der Bolzenmutter 14 ist eine weitere Unterlegscheibe oder, wie in dem Ausführungsbeispiel dargestellt, eine Sicherungsscheibe 16 angeordnet.

Wenn sowohl die Bolzenmutter 14 als auch die Hülsenmutter 10 angezogen sind, ergibt sich eine präzise, zuverlässige und feste Verbindung des ersten Teils 1 und des zweiten Teils 2. Das zunächst für das Einsetzen der Hülse 3 notwendige radiale Spiel wird bei dem Anziehen der Bolzenmutter 14 dadurch eliminiert, dass der erste Hülsenlängsabschnitt 6 durch den ersten Bolzenlängsabschnitt 12 aufgeweitet wird.

Erfindungsgemäß ergibt sich auch eine besonders vorteilhafte Kombination aus einer formschlüssigen sowie reibschlüssigen Verbindung. Durch die axiale Verspannung der Hülse 3 mit der Hülsenmutter 10 ergibt sich zunächst in axialer Richtung ein Formschluss. In Querrichtung bzw. radialer Richtung r, also an der Kontaktfläche zwischen dem ersten Teil 1 und dem zweiten Teil 2, wird durch die axiale Kraftbeaufschlagung ein Reibschluss erzeugt.

Wenn sich bei dem Anziehen der Bolzenmutter 14 die äußere Mantelfläche des ersten Hülsenlängsabschnittes 6 an den Innenumfang der Befestigungsöffnungen anlegt, wird in radialer Richtung r, das heißt in Querrichtung, auch ein spielfreier Formschluss erreicht, wobei durch das Klemmen der Mantelfläche des ersten Hülsenlängsabschnittes an den Innenumfang des ersten Teils 1 sowie des zweiten Teils 2 zusätzlich auch ein in axialer Richtung x wirkender Reibschluss erreicht wird.

## Patentansprüche

1. Schraubverbindungsanordnung mit
einer Hülse (3), die an einem ersten Hülsenende einen radial vorstehenden Bund (5) und ausgehend von dem ersten Hülsenende einen ersten Hülsenlängsabschnitt (6) aufweist, wobei der erste Hülsenlängsabschnitt (6) durch Längsschlitze (7) aufspreizbar ist und einen sich ausgehend von dem ersten Hülsenende konisch verjüngenden Innendurchmesser aufweist, und mit
einem Bolzen (4), der mit einem ersten Bolzenlängsabschnitt (12) in den ersten Hülsenlängsabschnitt (6) eingesetzt ist und an einem zweiten Ende des Bolzens (4) einen sich zumindest teilweise aus der Hülse (3) hinauserstreckenden zweiten Bolzenlängsabschnitt (13) mit einem Gewinde aufweist, auf dem eine Bolzenmutter (14) aufgenommen ist, wobei sich der erste Bolzenlängsabschnitt (12) in Richtung des zweiten Endes des Bolzens (4) konisch verjüngt,
**dadurch gekennzeichnet, dass** ausgehend von einem zweiten Hülsenende der Hülse (3) an einem zweiten Hülsenlängsabschnitt (9) ein Außengewinde für die Aufnahme einer Hülsenmutter (10) vorgesehen ist und wobei eine Stirnfläche (15) an dem zweiten Hülsenende eine Anlagefläche für die Bolzenmutter (14) bildet.

2. Schraubverbindungsanordnung nach Anspruch 1, wobei der Bund (5) an seinem Außenumfang Werkzeugaufnahmeflächen aufweist.

3. Schraubverbindungsanordnung nach einem der Ansprüche 1 oder 2, wobei der Bolzen (4) an seinem ersten und/oder zweiten Ende eine Werkzeugaufnahme aufweist.

4. Schraubverbindungsanordnung nach einem der Ansprüche 1 bis 3, wobei an dem sich konisch verjüngenden ersten Bolzenlängsabschnitt (12) und dem zugeordneten ersten Hülsenlängsabschnitt (6) eine formschlüssige Verdrehsicherung gebildet ist.

5. Schraubverbindung mit einem ersten Teil (1) an einer ersten Seite und mit einem zweiten Teil (2) an einer zweiten Seite, die an jeweils einer Befestigungsöffnung mit einer Schraubverbindungsanordnung nach einem der Ansprüche 1 bis 4 verbunden sind.

6. Schraubverbindung nach Anspruch 5, wobei die Hülse (3) mit ihrem Bund (5) an einer Außenfläche des ersten Teils (1) anliegt und an der gegenüberliegenden zweiten Seite (2) an einem mit einem Außengewinde versehenen zweiten Hülsenlängsabschnitt (9) über eine Hülsenmutter (10) gegen eine Außenfläche des zweiten Teils (2) verspannt ist, wobei der erste, mit Längsschlitzen (7) versehene Hülsenlängsabschnitt (6) von dem konischen ersten Bolzenlängsabschnitt (12) dadurch aufgespreizt ist, dass der zweite Bolzenlängsabschnitt (13) mit einer Bolzenmutter (14) gegen eine Stirnfläche (15) an dem zweiten Hülsenende gespannt ist und wobei eine Mantelfläche des ersten Hülsenlängsabschnitts (6) zumindest abschnittsweise an einem Innenumfang der Befestigungsöffnungen des ersten Teils (1) und des zweiten Teils (2) anliegt.

7. Schraubverbindung nach Anspruch 6, wobei die Hülse (3) außerhalb der Befestigungsöffnung des zweiten Teils (2) einen stufenförmigen Übergang (8) zwischen dem ersten Hülsenlängsabschnitt (6) und dem zweiten Hülsenlängsabschnitt (9) aufweist, wobei der stufenförmige Übergang (8) von einer zwischen der Außenfläche des zweiten Teils (2) und der Hülsenmutter (10) angeordneten Unterlegscheibe (11) verdeckt ist.

8. Schraubverbindung nach einem der Ansprüche 5 bis 7, wobei die Befestigungsöffnungen des ersten Teils (1) sowie des zweiten Teils (2) sich jeweils in Richtung der zweiten Seite konisch verjüngen.

9. Verfahren zur Verbindung zweier Teile (1, 2) mit einer Schraubverbindungsanordnung nach einem der Ansprüche 1 bis 4, wobei die Teile (1, 2) mit jeweils einer Befestigungsöffnung übereinander gelegt werden, wobei die Hülse (3) mit radialem Spiel in die übereinander liegenden Befestigungsöffnungen eingesetzt wird, so dass sich der radial vorstehende Bund an dem ersten Teil (1) abstützt, wobei der Bolzen (4) in die Hülse (3) eingesetzt ist oder eingesetzt wird und durch ein Anziehen einer Bolzenmutter (14) eine radiale Aufspreizung des mit Längsschlitzen (7) versehenen Hülsenlängsabschnitts (6) bewirkt.

## Claims

1. Screw connection arrangement having
a sleeve (3) which has a radially protruding collar (5) at a first sleeve end and a first longitudinal sleeve section (6) starting from the first sleeve end, wherein the first longitudinal sleeve section (6) is able to be spread open by way of longitudinal slits (7) and has a conically narrowing inside diameter starting from the first sleeve end, and having
a bolt (4) which has been inserted into the first longitudinal sleeve section (6) with a first longitudinal bolt section (12) and has, at a second end of the bolt (4), a second longitudinal bolt section (13) with a thread on which a bolt nut (14) is received, said second longitudinal bolt section (13) extending at least partially out of the sleeve (3), wherein the first longitudinal bolt section (12) narrows conically in the direction of the second end of the bolt (4),
**characterized in that** an external thread for receiving a sleeve nut (10) is provided on a second longitudinal sleeve section (9), starting from a second sleeve end of the sleeve (3), and wherein an end face (15) at the second sleeve end forms an abutment face for the bolt nut (14).

2. Screw connection arrangement according to Claim 1, wherein the collar (5) has tool receiving surfaces on its outer circumference.

3. Screw connection arrangement according to either of Claims 1 and 2, wherein the bolt (4) has a tool receptacle at its first and/or second end.

4. Screw connection arrangement according to one of Claims 1 to 3, wherein a form-fitting rotation lock is formed at the conically narrowing first longitudinal bolt section (12) and the associated first longitudinal sleeve section (6).

5. Screw connection having a first part (1) on a first side and having a second part (2) on a second side, which are connected at a respective fastening opening by way of a screw connection arrangement according to one of Claims 1 to 4.

6. Screw connection according to Claim 5, wherein the sleeve (3) bears by way of its collar (5) against an outer surface of the first part (1) and is braced, on the opposite second side (2), against an outer surface of the second part (2) via a sleeve nut (10) at a second longitudinal sleeve section (9) provided with an external thread, wherein the first longitudinal sleeve section (6), provided with longitudinal slits (7), is spread open by the conical first longitudinal bolt section (12) in that the second longitudinal bolt section (13) is clamped against an end face (15) at the second sleeve end by way of a bolt nut (14), and wherein a lateral surface of the first longitudinal sleeve section (6) bears at least sectionally against an internal circumference of the fastening openings of the first part (1) and of the second part (2).

7. Screw connection according to Claim 6, wherein, outside the fastening opening of the second part (2), the sleeve (3) has a step-like transition (8) between the first longitudinal sleeve section (6) and the second longitudinal sleeve section (9), wherein the step-like transition (8) is concealed by a washer (11) arranged between the outer surface of the second part (2) and the sleeve nut (10).

8. Screw connection according to one of Claims 5 to 7, wherein the fastening opening of the first part (1) and that of the second part (2) each narrow conically in the direction of the second side.

9. Method for connecting two parts (1, 2) by way of a screw connection arrangement according to one of Claims 1 to 4, wherein the parts (1, 2) are positioned one over the other with a respective fastening opening, wherein the sleeve (3) is inserted with a radial clearance into the fastening openings located one over the other, such that the radially protruding collar is supported on the first part (1), wherein the bolt (4) is or has been inserted into the sleeve (3) and radially spreads open the longitudinal sleeve section (6) provided with longitudinal slits (7) by tightening of a bolt nut (14).

## Revendications

1. Système de raccord vissé, comprenant :
une douille (3) qui présente, au niveau d'une première extrémité de douille, un épaulement (5) faisant saillie radialement et, partant de la première extrémité de douille, une première portion longitudinale de douille (6), la première portion longitudinale de douille (6) pouvant être écartée par des fentes longitudinales (7) et présentant un diamètre intérieur se rétrécissant coniquement depuis la première extrémité de douille, et comprenant
un boulon (4), qui est inséré avec une première portion longitudinale de boulon (12) dans la première portion longitudinale de douille (6) et qui présente à une deuxième extrémité du boulon (4) une deuxième portion longitudinale de boulon (13) s'étendant au moins en partie hors de la douille (3) avec un filetage sur lequel est reçu un écrou de boulon (14), la première portion longitudinale de boulon (12) se rétrécissant coniquement dans la direction de la deuxième extrémité du boulon (4),
**caractérisé en ce qu'**à partir d'une deuxième extrémité de douille de la douille (3) au niveau d'une deuxième portion longitudinale de douille (9), un filetage extérieur est prévu pour recevoir un écrou de douille (10), et une surface frontale (15) au niveau de la deuxième extrémité de douille formant une surface d'appui pour l'écrou de boulon (14).

2. Système de raccord vissé selon la revendication 1, dans lequel l'épaulement (5) présente des surfaces de réception d'outil au niveau de sa périphérie extérieure.

3. Système de raccord vissé selon l'une quelconque des revendications 1 ou 2, dans lequel le boulon (4) présente un logement d'outil au niveau de sa première et/ou de sa deuxième extrémité.

4. Système de raccord vissé selon l'une quelconque des revendications 1 à 3, dans lequel une fixation antirotation par engagement par correspondance de formes est formée au niveau de la première portion longitudinale de boulon (12) se rétrécissant coniquement et de la première portion longitudinale de douille (6) associée.

5. Raccord vissé comprenant une première partie (1) au niveau d'un premier côté et une deuxième partie (2) au niveau d'un deuxième côté, qui sont raccordées à chaque fois au niveau d'une ouverture de fixation à un système de raccord vissé selon l'une quelconque des revendications 1 à 4.

6. Raccord vissé selon la revendication 5, dans lequel la douille (3) s'applique avec son épaulement (5) contre une surface extérieure de la première partie (1) et est serrée au niveau du deuxième côté opposé (2) au niveau d'une deuxième portion longitudinale de douille (9) pourvue d'un filetage extérieur par le biais d'un écrou de douille (10) contre une surface extérieure de la deuxième partie (2), la première portion longitudinale de douille (6) pourvue de fentes longitudinales (7) étant écartée par la première portion longitudinale de boulon conique (12) par le fait que la deuxième portion longitudinale de boulon (13) est serrée avec un écrou de boulon (14) contre une surface frontale (15) au niveau de la deuxième extrémité de douille, et une surface d'enveloppe de la première portion longitudinale de douille (6) s'appliquant au moins en partie contre une périphérie intérieure des ouvertures de fixation de la première partie (1) et de la deuxième partie (2).

7. Raccord vissé selon la revendication 6, dans lequel la douille (3) présente, à l'extérieur de l'ouverture de fixation de la deuxième partie (2), une transition de forme étagée (8) entre la première portion longitudinale de douille (6) et la deuxième portion longitudinale de douille (9), la transition de forme étagée (8) étant couverte par une rondelle (11) disposée entre la surface extérieure de la deuxième partie (2) et l'écrou de douille (10).

8. Raccord vissé selon l'une quelconque des revendications 5 à 7, dans lequel les ouvertures de fixation de la première partie (1) ainsi que de la deuxième partie (2) se rétrécissent coniquement à chaque fois dans la direction du deuxième côté.

9. Procédé pour raccorder deux parties (1, 2) avec un système de raccord vissé selon l'une quelconque des revendications 1 à 4, les pièces (1, 2) étant placées l'une au-dessus de l'autre avec à chaque fois une ouverture de fixation, la douille (3) étant insérée avec un jeu radial dans les ouvertures de fixation placées l'une au-dessus de l'autre de telle sorte que l'épaulement saillant radialement s'appuie contre la première pièce (1), le boulon (4) étant inséré dans la douille (3) et, par serrage d'un écrou de boulon (14), provoquant un écartement radial de la portion longitudinale de douille (6) pourvue de fentes longitudinales (7).
